Europäisches Patentamt

European Patent Office

Office européen des brevets

(19)

(11) Publication number: **0 076 047**
**B1**

(12) **EUROPEAN PATENT SPECIFICATION**

(45) Date of publication of patent specification: **13.08.86**

(51) Int. Cl.⁴: **H 04 N 9/80**

(21) Application number: **82304682.6**

(22) Date of filing: **07.09.82**

(54) **Color video signal recording and reproducing apparatus.**

(30) Priority: **09.09.81 JP 140971/81**
**02.04.82 JP 53822/82**

(43) Date of publication of application:
**06.04.83 Bulletin 83/14**

(45) Publication of the grant of the patent:
**13.08.86 Bulletin 86/33**

(84) Designated Contracting States:
**AT DE FR**

(56) References cited:
**DE-A-2 740 942**
**DE-A-2 803 824**
**FR-A-2 471 712**

(73) Proprietor: **Hitachi, Ltd.**
**5-1, Marunouchi 1-chome**
**Chiyoda-ku Tokyo 100 (JP)**

(72) Inventor: **Komatsu, Keiichi**
**Yorii-Apartment House 433 391-2, Tabiko**
**Katsuta-shi Ibaraki-ken (JP)**
Inventor: **Kuroyanagi, Tomomitsu**
**Tabikoryo 266-go 391-2, Tabiko**
**Katsuta-shi Ibaraki-ken (JP)**
Inventor: **Kojima, Noboru**
**Totsukaryo 218 1745, Totsukacho**
**Totsuka-ku Yokohama (JP)**
Inventor: **Shibata, Akira**
**857-11, Tsuda**
**Katsuta-shi (JP)**

(74) Representative: **Paget, Hugh Charles Edward et al**
**MEWBURN ELLIS & CO. 2/3 Cursitor Street**
**London EC4A 1BQ (GB)**

Courier Press, Leamington Spa, England.

EP 0 076 047 B1

## Description

This invention relates to a magnetic recording and reproducing apparatus for recording and reproducing both of a PAL color television signal and a SECAM color television signal. More particularly, this invention relates to a color video signal recording and reproducing apparatus for recording a SECAM color television signal after converting it into a PAL color television signal.

The color television systems employed presently in the world are broadly classified into the NTSC system, the PAL system and the SECAM system. For example, the NTSC system is employed in countries such as Japan and the United States of America, the PAL system is employed in the United Kingdom, some countries of Western Europe and some countries of Middle and Near East, and the SECAM system is employed in France, other countries of Middle and Near East and countries of Eastern Europe. Therefore, video tape recorders (abbreviated hereinafter as VTR's) meeting the individual systems have been manufactured, and the VTR's of the same system as the specific color television system are now used in various countries. However, both of the PAL system and the SECAM system are co-existent in the countries of Europe and countries of Middle and Near East as described above, and this co-existence poses various problems.

For example, from the aspect of sales of magnetic tapes recorded with color television signals, tapes having records recorded according to the PAL system and those having records recorded according to the SECAM system must be manufactured due to the impossibility of unification of the standards of the PAL and SECAM systems, resulting in very bad efficiency.

Further, the wire television in France employs the PAL system, and the status is such that a VTR of SECAM system cannot deal with the wire television of PAL system. Furthermore, since a colour television signal of PAL system can also be received in areas in the vicinity of the boundaries between France and the neighbourhood countries, people living in such areas will desire a VTR capable of recording and reproduction of not only a colour television signal of SECAM system but also a colour television signal of PAL system.

In a prior art manner of recording a SECAM colour television signal on a magnetic tape (see for example French Patent Specification No. 2,471,712), a SECAM chrominance signal having a centre frequency of 4.4 MHz is counted down by the factor of 1/4 to be converted into an FM signal having a centre frequency of about 1.1 MHz, this FM signal being superimposed on a luminance signal subjected to frequency modulation, and the composite video signal is recorded on the magnetic tape. Since the chrominance signal requires a bandwidth of about ±500 kHz, the occupied band of the chrominance signal is from 0.6 MHz to 1.6 MHz. On the other hand, the allocation of the band to the FM luminance signal is determined from the bandwidth characteristic peculiar to the tape-head system, and the range of frequency deviation of the carrier signal is selected to be from 3.8 MHz to 4.8 MHz. Therefore, there is only a limited bandwidth of 2.75 MHz between the carrier frequency of 4.35 MHz corresponding to the gray level of the luminance signal and the upper limit frequency, 1.6 MHz, of the chrominance signal. The luminance signal requires a bandwidth of more than 3 MHz, and the above-described bandwidth of 2.75 MHz is insufficient.

Further, there is a proposal according to which a frequency-modulated audio signal is inserted between the spectrum of a luminance signal and that of a chrominance signal so as to record the video signal and audio signal in a frequency multiplex mode on video tracks of a magnetic tape. However, the audio signal cannot be multiplexed when the frequency bandwidth between the chrominance signal and the luminance signal is narrow.

When a chrominance signal is recorded in the form of an FM signal on a magnetic tape, it is difficult to remove a crosstalk signal from the adjacent tracks by an electrical circuit. It is therefore common practice to utilize the cross-azimuth effect of the magnetic head to suppress the crosstalk. For this purpose the frequency of the chrominance signal is set to be relatively high, and this provides the source of the shortage of the bandwidth of the luminance signal. Further, the energy of the sidebands of the chrominance signal subjected to frequency modulation is larger than when the chrominance signal is subjected to amplitude modulation, and this makes difficult to multiplex another signal between the chrominance signal and the luminance signal.

The tape pattern is greatly limited when a chrominance signal is recorded in the form of an FM signal on a magnetic tape. That is, chrominance alignment is required in order to minimize the adverse effect of a crosstalk signal from the adjacent tracks. The term "chrominance alignment" is used to indicate that the recorded position of the R—Y signal and B—Y signal of the chrominance signal on a track of the magnetic tape aligns with that of the R—Y signal and B—Y signal recorded on each of the adjacent tracks. In this connection, it is quite natural that the recorded position of the horizontal synchronizing signal on the former track must also align with that of the horizontal synchronizing signal on the latter tracks. This alignment will hereinafter be called H alignment. However, the value of H representing the number of non-aligned horizontal synchronizing signals among those permitting the chrominance alignment is limited, and it is impossible to attain a balance between the picture quantity and the recording period of time.

Objects of the present invention include the provision of a colour video signal recording and reproducing apparatus which can improve the S/N ratio of the chrominance signal in a colour television signal of SECAM system and also the provision of apparatus to record and reproduce both a colour television signal of PAL system and a colour television signal of SECAM system.

According to a first aspect of the present invention there is provided a colour video signal recording and reproducing apparatus of the type which includes means for separating a luminance signal and a chrominance signal from a colour television input signal, and for converting the frequency band of said chrominance signal into a range lower than that of said luminance signal for the purpose of recording said chrominance signal and said luminance signal on a magnetic tape in frequency multiplex mode, characterised in that said apparatus includes filter means for separating a SECAM chrominance signal and a luminance signal from a SECAM colour television signal, converter means for converting said SECAM chrominance signal into a PAL chrominance signal, processing means for converting the frequency band of said PAL chrominance signal into a range lower than that of said luminance signal, and recording means for recording said frequency-converted PAL chrominance signal and said luminance signal on a magnetic tape in frequency multiplex mode.

According to a second aspect of the present invention there is provided a colour video signal recording and reproducing apparatus of the type which includes means for separating a luminance signal and a chrominance signal from a colour television input signal, and for converting the frequency band of said chrominance signal into a range lower than that of said luminance signal for the purpose of recording said chrominance signal and said luminance signal on a magnetic tape in frequency multiplex mode characterised in that, said apparatus includes means for converting a chrominance signal in a SECAM television signal into a balanced modulation signal, a dynamic emphasis circuit provided in the succeeding stage to said converting means, a comb filter for suppressing a crosstalk signal from the tracks adjacent to a track being produced in replay mode, and a dynamic de-emphasis circuit provided in the succeeding stage of said comb filter.

According to a third aspect of the present invention there is provided a color video signal recording and reproducing apparatus for converting a SECAM color video signal into a PAL color video signal in which a frequency-modulated chrominance signal and an amplitude-modulated luminance signal are separated from said SECAM color video signal including said chrominance signal and said luminance signal, said separated luminance signal is converted into a frequency-modulated luminance signal, said separated chrominance signal is converted into an amplitude-modulated chrominance signal, and a frequency band of said amplitude-modulated chrominance signal is converted into a range lower than a frequency band of said frequency-modulated luminance signal for the purpose of recording said frequency-modulated luminance signal and said amplitude-modulated chrominance signal on a magnetic tape;

characterized in that the apparatus includes:

a dynamic emphasis circuit for emphasizing small amplitude portions of said amplitude-modulated chrominance signal, said dynamic emphasis circuit being connected to a succeeding stage of a signal converting means for converting said frequency-modulated chrominance signal into said amplitude-modulated chrominance signal,

a first chrominance signal processing circuit for converting a frequency band of a carrier wave of said amplitude-modulated chrominance signal into a range lower than said frequency band of said frequency-modulated luminance signal, said first chrominance signal processing circuit being connected to a succeeding stage of said dynamic emphasis circuit,

a preamplifier for amplifying said frequency-modulated luminance signal and said amplitude-modulated chrominance signal reproduced from said magnetic tape,

a luminance signal processing circuit for demodulating said frequency-modulated luminance signal, luminance signal processing circuit being connected to a succeeding stage of said preamplifier,

a second chrominance signal processing circuit for converting said frequency band of said carrier wave of said amplitude-modulated chrominance signal into a range higher than said frequency band of said frequency-modulated luminance signal, said second chrominance signal processing circuit being connected to said preamplifier,

a comb filter for removing crosstalk signals from said amplitude-modulated chrominance signal, said filter being connected to a succeeding stage of said second chrominance signal processing circuit, and

a dynamic de-emphasis circuit for reducing small amplitude portions of said amplitude-modulated chrominance signal, said dynamic de-emphasis circuit being connected to a succeeding stage of said filter.

The present invention will now be described in greater detail by way of example with reference to the accompanying drawings, in which:

Figure 1 is a circuit diagram showing the structure of an embodiment of the recording and reproducing apparatus according to the present invention;

Figure 2 is a circuit diagram showing the structure of another embodiment of the recording and reproducing apparatus according to the present invention;

Figure 3 is a circuit diagram showing the structure of yet another embodiment of the recording and reproducing apparatus according to the present invention;

Figure 4 is a spectral diagram of a color television signal recorded by the recording and reproducing apparatus of the present invention;

Figure 5 is a circuit diagram showing the structure of one form of the SECAM→PAL converting circuit employed in the present invention;

Figures 6, 7 and 8 are circuit diagrams showing the structure of other forms of the SECAM→PAL converting circuit employed in the present invention;

Figure 9 is a circuit diagram showing the structure of the PAL→SECAM converting circuit employed in the present invention;

Figure 10 illustrates signals appearing at various parts of the circuit shown in Figure 9;

Figures 11, 12 and 13 are circuit diagrams showing the structure of other forms of the PAL→SECAM converting circuit employed in the present invention;

Figure 14 is a tape pattern diagram showing a signal pattern recorded on a magnetic tape by the recording and reproducing apparatus of the present invention shown in Figure 1;

Figure 15 is a circuit diagram showing the structure of another embodiment of the recording and reproducing apparatus according to the present invention;

Figure 16 is a characteristic diagram showing an example of the input-output characteristic of the dynamic emphasis circuit and dynamic de-emphasis circuit employed in the apparatus of the present invention shown in Figure 15;

Figures 17 and 18 are characteristic diagrams showing two examples of the emphasis characteristic of the dynamic emphasis circuit employed in the apparatus of the present invention shown in Figure 15;

Figures 19 and 20 are characteristic diagrams showing two examples of the emphasis characteristic of the dynamic de-emphasis circuit employed in the apparatus of the present invention shown in Figure 15;

Figure 21 is a tape pattern diagram showing a signal pattern recorded on a magnetic tape by the recording and reproducing apparatus of the present invention shown in Figure 15;

Figure 22 is a circuit diagram showing the structure of another embodiment of the recording and reproducing apparatus according to the present invention;

Figure 23 is a circuit diagram showing the structure of one form of the carrier generator circuit employed in the apparatus of the present invention shown in Figure 22;

Figure 24 is a circuit diagram showing the structure of one form of the dynamic emphasis circuit employed in the apparatus of the present invention shown in Figure 22; and

Figures 25 and 26 are circuit diagrams showing the structure of two forms of the dynamic de-emphasis circuit employed in the apparatus of the present invention shown in Figure 22.

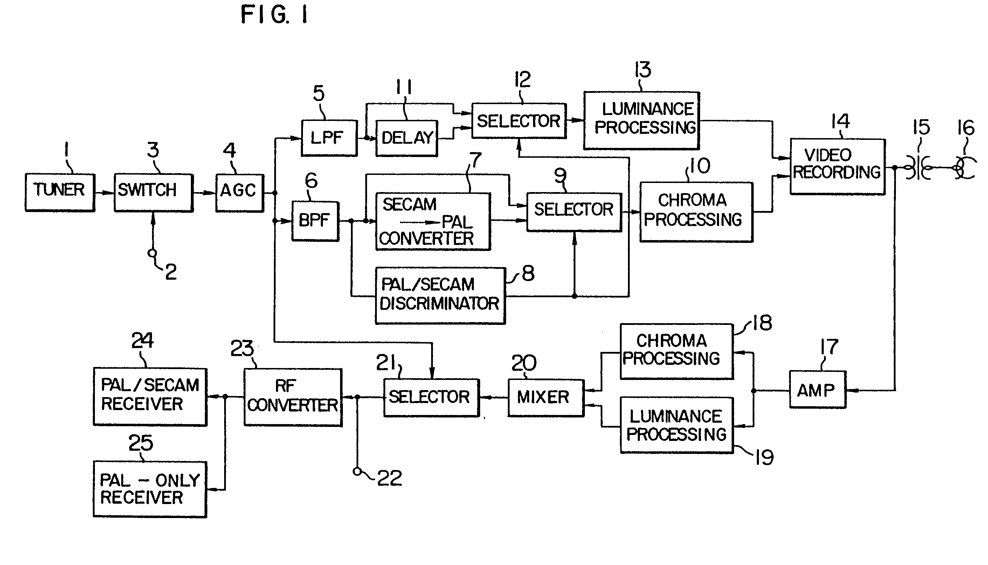

An embodiment of the magnetic recording and reproducing apparatus according to the present invention will now be described in detail with reference to Figure 1. The apparatus shown in Figure 1 is of the type in which a PAL color television signal or a SECAM color television signal is applied as its input signal, and the reproduced signal and the signal to be monitored are applied to a PAL television receiver and a monitor respectively.

Referring to Figure 1, a PAL color television signal or a SECAM color television signal is applied to a tuner 1 or to a video signal input terminal 2. The signal applied to the tuner 1 or video signal input terminal 2 is selected by a selector switch 3, and an AGC circuit 4 maintains the level of the input signal at a predetermined signal level. The output signal, which is either the PAL signal or the SECAM signal, from the AGC circuit 4 is applied to a record/reproduction selector circuit 21, to a low-pass filter (abbreviated hereinafter as an LPF) 5 and to a band-pass filter (abbreviated hereinafter as a BPF) 6. The chrominance signal appearing from the BPF 6 is applied to a PAL/SECAM discriminating circuit 8 which discriminates as to whether the input signal is a PAL signal or a SECAM signal.

The manner of processing in response to the application of the PAL signal to the PAL/SECAM discriminator circuit 8 will first be described.

When application of the PAL signal is discriminated by the PAL/SECAM discriminator circuit 8, the output signal from the BPF 6 passes directly through a first PAL/SECAM selector circuit 9 to be applied through a recording chrominance signal processing circuit 10 to a video recording circuit 14. The luminance signal from the LPF 5 passes also directly through a second PAL/SECAM selector circuit 12 to be applied through a recording luminance signal processing circuit 13 to the video recording circuit 14.

The manner of processing in response to the application of the SECAM signal to the PAL/SECAM discriminator circuit 8 will next be described. When application of the SECAM signal is discriminated by the PAL/SECAM discriminator circuit 8, the output signal from the BPF 6 is converted into a PAL signal by a SECAM→PAL converter circuit 7 and is then applied through the PAL/SECAM selector circuit 9 and the recording chrominance signal processing circuit 10 to the video recording circuit 14. The chrominance signal passing through the SECAM→PAL converter circuit 7 is delayed relative to the luminance signal, and such a delay time is compensated by passing the luminance signal through a delay circuit 11. The output signal from the video recording circuit 14 is applied through a rotary transformer 15 to a magnetic head 16. This rotary transformer 15 may not be provided or may be eliminated when other means such as a slip ring is provided. In the manner above described, the input color television signal which may be a SECAM signal instead of a PAL signal can be converted into a PAL signal which is recorded on a magnetic tape by the VTR.

In the playback mode, the signal amplified by a reproduced signal amplifier 17 is applied to a reproduced luminance signal processing circuit 19 and a reproduced chrominance signal processing circuit 18, and the output signals from the circuits 19 and 18 are mixed in a C/Y mixer circuit 20 to appear as the reproduced PAL video signal from the C/Y mixer circuit 20. The record/reproduction selector circuit 21 acts to selectively apply the recording signal or reproduced signal to a video output terminal 22. Thus, in the record mode, the received input signal passes through the AGC circuit 4 and selector circuit 21 to appear intact at the video output terminal 22, while, in the playback mode, the reproduced PAL signal from the mixer circuit 20 passed through the selector circuit 21 to appear at the video output terminal 22 of the VTR. The output signal from the selector circuit 21 is applied, on one hand, directly to the video output terminal 22 and, on the other hand, to a PAL/SECAM receiver 24 and a PAL-only receiver 25 through an RF converter 23.

The first feature of the embodiment shown in Figure 1 is that the SECAM signal is converted into the PAL signal after the color television input signal is separated into the luminance signal and chrominance signal. (This separation will be referred to hereinafter as Y, C separation). The second feature is that the input signal is passed through the AGC circuit 4 prior to the Y, C separation.

The first feature above described provides such a merit that the tendency of degradation of signal quality during the conversion of the SECAM signal into the PAL signal is minimized. More precisely, according to the customary process of conversion, a composite video signal is subjected to the SECAM→PAL conversion after the Y, C separation, and, then, the Y, C mixing is made to obtain a PAL composite video signal. Subsequently, this PAL composite video signal is subjected to the Y, C separation again for the purpose of recording the signal on a magnetic tape. Consequently, the signal quality is greatly degraded because the signal is subjected to the Y, C separation twice. In contrast, in the embodiment of the present invention shown in Figure 1, the signal is subjected to the Y, C separation only once prior to the SECAM→PAL conversion, and the signal subjected to the Y, C separation is subjected in that form to the SECAM→PAL conversion, the SECAM→PAL converted signal being then recorded on a magnetic tape. Therefore, the Y, C separation is done only once thereby minimizing the tendency of signal quality degradation.

The second feature above described provides such a merit that the structure of the VTR circuit is simplified. In the record mode, it is necessary to monitor the recording signal on the PAL/SECAM receiver 24, and, for the purpose of ensuring proper monitoring, it is required that the input signal to the RF converter 23 has a required level. It is therefore necessary to apply the recording signal to the RF converter 23 after passing it through the AGC circuit 4. On the other hand, the AGC circuit 4 is also required for the purpose of operating the recording luminance signal processing circuit 13 as designed. Therefore, the VTR structure shown in Figure 1 is best in that a single AGC circuit 4 can serve attainment of the two purposes above described. In an arrangement in which such an AGC circuit is provided for making the automatic gain control after the stage of SECAM→PAL conversion, either the automatic gain control is done after the conversion of the SECAM signal into the PAL composite video signal or the record/reproduction selection is done for each of the Y and C signals. Such an arrangement is not preferable in that the performance is more degraded than the arrangement shown in Figure 1 or the number of required circuits is more than that shown in Figure 1.

The delay circuit 11 in Figure 1 is provided for compensating the delay time of the chrominance signal due to passing through the SECAM→PAL converter circuit 7.

The SECAM→PAL converter circuit 7 includes a 1H delay circuit, where H is the horizontal scanning period of 64 μsec so that the chrominance signal passing through this converter circuit 7 is delayed by

$$(\frac{1}{2}H + \Delta\tau).$$

On the other hand, the delay time of the delay circuit 11 is selected to be $\Delta\tau$ or $(1H + \Delta\tau)$. Undercompensation will result when the delay time is selected to be $\Delta\tau$, and overcompensation will result when the delay time is selected to be $(1H + \Delta\tau)$. However, considering that the chrominance signal processed by the reproduced chrominance signal processing circuit 18 in the VTR is delayed by 1H relative to the luminance signal and that a similar delay occurs in the television receiver, it is generally preferable that the delay time of the delay circuit 11 is selected to be $(1H + \Delta\tau)$.

On the other hand, when the delay time of the SECAM→PAL converter circuit 7 can be designed to be not longer than 200 ns, the delay circuit 11 and the selector circuit 12 may not be necessary. That is, the filters 5 and 6 may be so designed that, when the delay time of the converter circuit 7 is 200 ns and the PAL signal is the input to the VTR, the chrominance signal is recorded in a relation advanced by 100 ns relative to the luminance signal, while when the SECAM signal is the input to the VTR, the chrominance signal is recorded in a relation delayed by 100 ns relative to the luminance signal.

Or, in a set in which the PAL signal is given priority over the SECAM signal to meet the needs of the users, the delay circuit 11 and the selector circuit 12 can be eliminated by arranging so that the luminance and chrominance signals are recorded in a relation coincident relative to time when the PAL signal is the input to the VTR, while the chrominance signal is recorded in a relation delayed by 200 ns relative to the luminance signal. It is needless to mention that the SECAM signal may have priority over the PAL signal.

When a SECAM color television signal is converted into a PAL color television signal as described above, and the SECAM→PAL converted signal is recorded on a magnetic tape, the chrominance signal included in the color television signal may merely be modified. In such a case, it is preferable to demodulate the chrominance signal extracted from the color television signal and subject it to balanced modulation again to convert it into an AM signal.

There are two practical methods for demodulating the FM chrominance signal and converting the demodulated signal into the AM chrominance signal by the balanced modulation. According to the first method, the signal is modulated again in the form of the line sequential signal. According to the second method, the signal is converted into a PAL chrominance signal. The first method provides such a merit that the line sequential signal need not be modified into a simultaneous signal and the circuit structure is simplified. The second method provides such a merit that the PAL signal and the SECAM signal can be easily recorded by a single VTR although the circuit structure becomes complex.

In each case, the repetition period of the converted chrominance signal is 2H, where H is the horizontal scanning period, and its value is 64 μsec for each of the PAL and SECAM systems.

Therefore, in a VTR of the guardband-less cross-azimuth recording type, the frequency $f_{LC}$ of the chrominance signal recorded on a magnetic tape after being converted into a low-frequency band should satisfy the following condition:

$$f_{LC} = (n \pm \frac{1}{8})f_H \qquad (1)$$

where n is an integer, and $f_H$ is the horizontal synchronizing frequency of 15.625 kHz.

The difference $\Delta$ between the chrominance signal frequency $f_{LC}$ recorded on a main track and the chrominance signal frequency $f_{LC}'$ recorded on an adjacent track is given by

$$\Delta = f_{LC} - f_{LC}' = (m \pm \frac{1}{4})f_H \qquad (2)$$

where m is an integer including zero.

The values of $f_{LC}$ and $\Delta$ satisfying the above condition are, for example, as follows:

$$f_{LC} = (47 - \frac{1}{8})f_H = 720.7 \text{ kHz} \qquad (3)$$

$$\Delta = f_{LC} - f_{LC}' = \frac{1}{4}f_H \qquad (4)$$

There are various methods for providing the frequency difference $\Delta$ expressed by

$$\Delta = \pm \frac{1}{4}f_H.$$

According to one of the methods, the chrominance signal recorded by a first magnetic head having a first azimuth angle has the frequency $f_{LC}$ of

$$(47 - \frac{1}{8})f_H$$

and is not subjected to any phase shift, while the phase of the chrominance signal recorded by a second magnetic head having a second azimuth angle is delayed or advanced by 90° at time intervals of 1H. When the phase shift above described is effected, the frequency $f_{LC}$ of the chrominance signal recorded on the magnetic tape is expressed as follows:

In the case of delaying phase shift,

$$f_{LC} = \{(47 - \frac{1}{8}) - \frac{1}{4}\}f_H \qquad (5)$$

$$\Delta = \frac{1}{4}f_H \qquad (6)$$

and, in the case of advancing phase shift,

$$f_{LC} = \{(47 - \frac{1}{8}) + \frac{1}{4}\}f_H \qquad (7)$$

$$\Delta = \frac{1}{4}f_H \qquad (8)$$

Thus, the condition required for the chrominance signal frequency can be satisfied.

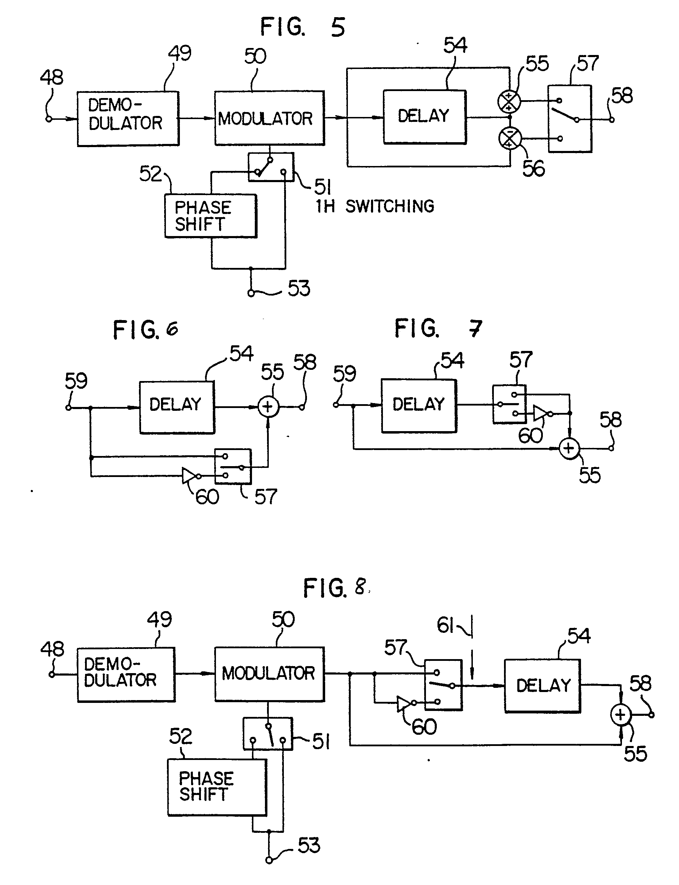

The spectrum of the chrominance signal above described is as shown in Figure 5. Figure 5 represents the spectrum of a color television signal recorded by the magnetic recording and reproducing apparatus of the present invention shown in Figure 1, and the chrominance signal indicated by the symbol C has the band ranging from 0.22 MHz to 1.22 MHz. Therefore, a pilot signal P (having, for example, four frequencies of 101 kHz, 117 kHz, 147 kHz and 163 kHz) can be recorded in the frequency band lower than that of the chrominance signal, and the FM audio signal A can be recorded between the chrominance signal C and the FM luminance signal Y. The required sound quality can be sufficiently ensured when the occupied bandwidth of the FM audio signal A is between ±50 kHz and ±100 kHz. Therefore, when the center frequency and occupied bandwidth of the FM audio signal A are, for example, 1.4 MHz and ±100 kHz respectively, the upper limit frequency of the FM audio signal A limiting the reproduction band of the luminance signal Y is 1.5 MHz which is lower than the prior art upper limit frequency, 1.6 MHz, of the chrominance signal.

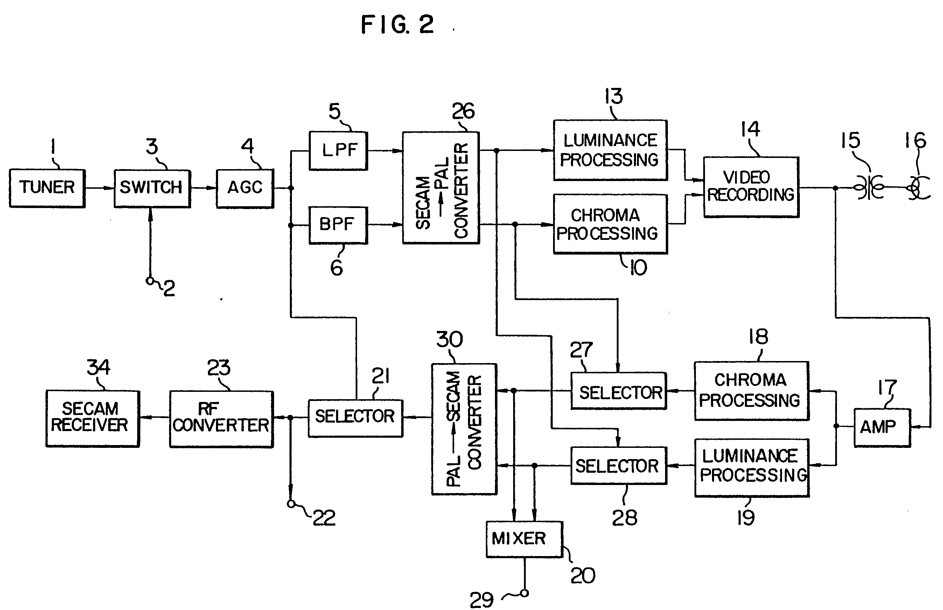

Figure 2 shows the structure of another embodiment of the magnetic recording and reproducing apparatus according to the present invention. The apparatus shown in Figure 2 is of the type in which a SECAM television receiver receives the reproduced signal and monitoring signal.

The apparatus shown in Figure 2 is a modification of that shown in Figure 1 and differs from the latter in that the output signal from a SECAM→PAL converter circuit 26 is applied not only to the recording luminance signal processing circuit 13 and recording chrominance signal processing circuit 10, but also to record/reproduction selector circuits 27 and 28 disposed in the reproducing part of the VTR. A SECAM color television signal applied through the tuner 1 or the video signal input terminal 2 is processed in a manner similar to that described with reference to Figure 1 to be recorded in the form of a PAL signal.

In the playback mode, the signal passed through the reproduced signal amplifier 17, reproduced luminance signal processing circuit 19 and reproduced chrominance signal processing circuit 18 is applied to the record/reproduction selector circuits 27 and 28. The PAL signal is applied to these selector circuits 27 and 28 in each of the record mode and the playback mode, and their output signals are mixed in the C/Y mixer circuit 20 to appear as the PAL signal at a video signal output terminal 29. The output signals from the selector circuits 27 and 28 are applied also to a PAL→SECAM converter circuit 30 to appear as a SECAM signal therefrom. The output signal from the record/reproduction selector circuit 21 is applied, on one hand, directly to the video signal output terminal 22 and on the other hand, to a SECAM television receiver 34 through the RF converter 23. Of course, the video signal output terminals 22 and 29 may be replaced by a single output terminal by provision of a selector circuit.

The first feature of the embodiment shown in Figure 2 is that the signal is subjected to the PAL→SECAM conversion after the Y, C separation. The second feature is that the signal is applied to the record/reproduction selector circuits 27 and 28 in the form subjected to the Y, C separation. The third feature is that the PAL signal output terminal 29 is additionally provided.

The first feature provides the advantage that the tendency of undesirable degradation of the signal quality resulting from the PAL→SECAM conversion can be minimized for the same reason as that described with reference to Figure 1. The second feature provides the advantage that, while recording the PAL signal, the PAL→SECAM converted signal can be monitored on the SECAM television receiver 34.

The third feature provides the advantage that the tendency of undesirable degradation of the picture quality resulting from dubbing of the VTR reproduced signal by another VTR can be minimized. More precisely, the signal appearing at the video output terminal 29 is the PAL signal which can be directly recorded. On the other hand, the signal appearing at the video output terminal 22 is the PAL→SECAM converted signal, and such a signal must then be SECAM→PAL converted in a recording VTR, resulting in undesirable degradation of the picture quality in the SECAM→PAL converter circuit of the recording VTR.

In addition to the record/reproduction selecting function, the selector circuit 21 in Figure 2 functions also as a selector which applies the PAL or SECAM monitoring signal to a PAL receiver or the SECAM receiver 34 in the record mode.

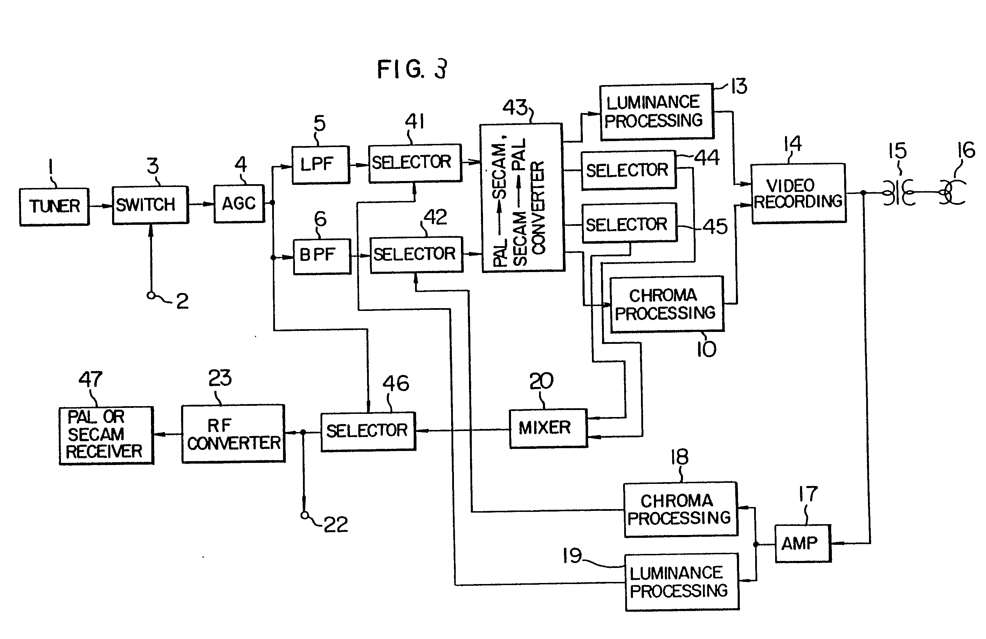

Figure 3 shows the structure of yet another embodiment of the magnetic recording and reproducing apparatus according to the present invention. The apparatus shown in Figure 3 is constructed to be suitable for one-chip integration of its SECAM→PAL converter circuit and PAL→SECAM converter circuit. In Figure 3, like reference numerals are used to denote like parts appearing in Figure 2.

A color television input signal is separated into a luminance signal and a chrominance signal as described with reference to Figure 2. Record/reproduction selector circuits 41 and 42 are disposed on the input side of a SECAM→PAL and PAL→SECAM converter circuit 43 in the form of a one-chip integrated circuit.

In the record mode, the signal applied to the system converter circuit 43 is automatically discriminated for the purpose of system conversion. In Figure 3, PAL and SECAM luminance and chrominance signals appear from the system converter circuit 43. For example, when a PAL signal is applied, the system converter circuit 43 functions as a PAL→SECAM converter so that both of the PAL→SECAM converted signal and the un-processed PAL signal appear from the system converter circuit 43. Similarly, PAL and SECAM signals appear from the system converter circuit 43 when a SECAM signal is applied thereto. In the record mode, the PAL signal passes finally through the video recording circuit 14 to be recorded on a magnetic tape.

In the VTR, there is a mode in which the recording signal not applied to its tape-head system is applied to a monitor to be monitored during recording. This mode will be referred to hereinafter as an EE mode. In the EE mode starting simultaneously with recording, the output signal from the system converter circuit 43 is applied to PAL/SECAM selector circuits 44 and 45 suitably changed over when a PAL or SECAM television receiver 47 is used for monitoring. After the PAL/SECAM selection, the output signals from the PAL/SECAM selector circuits 44 and 45 are mixed in the C/Y mixer circuit 20, and the output signal from the C/Y mixer circuit 20 is applied to a thru/EE, PB selector circuit 46 to be directly applied to the video signal output terminal 22 or applied through the RF converter 23 to the PAL or SECAM television receiver 47. The term "thru" is used to indicate that an input signal applied to the circuit 46 appears directly as its output signal without any conversion.

In the playback mode, the reproduced signal passed through the reproduced signal amplifier 17, reproduced luminance signal processing circuit 19 and reproduced chrominance signal processing circuit 18 is applied through the record/reproduction selector circuits 41 and 42 to the system converter circuit 43 to be subjected to the PAL→SECAM conversion as in the case of the record mode. After change-over of the PAL/SECAM selector circuits 44 and 45 depending on the type of the television receiver 47 used for monitoring, the output signals from the PAL/SECAM selector circuits 44 and 45 are applied to the C/Y mixer circuit 20, and the output signal from the mixer circuit 20 is applied through the thru/EE, PB selector circuit 46 to the video signal output terminal 22 or to the television receiver 47.

The VTR so constructed can thus handle both of a PAL color television signal and a SECAM color television signal.

A problem common to all of the apparatus shown in Figures 1 to 3 is that the chrominance signal is delayed relative to the luminance signal. However, such a problem is also encountered in VTR's, PAL television receivers and SECAM television receivers presently available in the market, and the delay time allowed to the chrominance signal relative to the luminance signal is generally about 1.5 H.

The delay time of the chrominance signal relative to the luminance signal will now be summarized for some of the parts of the apparatus. A delay time of 0.5 H occurs in the SECAM→PAL conversion, a delay time of 1.0 H occurs in the reproducing circuit of the PAL VTR, a delay time of 0.5 H occurs in the PAL→SECAM conversion, and a delay time of 0.5 H occurs in the SECAM television receiver.

Therefore, when a SECAM→PAL converted signal recorded on a magnetic tape is reproduced to be monitored on a SECAM television receiver, the chrominance signal is delayed by 2.5 H relative to the luminance signal. On the other hand, the chrominance signal is delayed by 1.5 H relative to the luminance signal when a PAL signal recorded on a magnetic tape is reproduced to be monitored on a PAL television receiver. Although this delay of the chrominance signal relative to the luminance signal can be compensated by correspondingly delaying the luminance signal, it is extremely difficult to delay the luminance signal by several horizontal scanning periods, and a delay time of 1 H is a practical compromise.

Where the luminance signal is to be delayed by 1 H is a matter of consideration. The most convenient part is the reproduced luminance signal processing circuit 19 in Figure 1.

This is because the selection of the specific circuit for delaying the luminance signal is effective for all of the following manners of use of the VTR. In the first manner of use, after a first step of recording and reproduction of a PAL signal, a second step of recording and reproduction (dubbing) is repeated to view the reproduced PAL signal on a PAL television receiver. In this case, the chrominance signal is delayed by 0.5 H only relative to the luminance signal without giving rise to any practical problem.

In the second manner of use, after conversion of a SECAM signal into a PAL signal, the step of recording and reproduction is repeated twice, and the PAL signal is converted into the SECAM signal again to view the reproduced SECAM signal on a SECAM television receiver. In this case, the chrominance signal is delayed by 1.5 H relative to the luminance signal, and an allowable picture quality is ensured.

When a further higher picture quality is required, it is preferable to delay the luminance signal by 1 H in the PAL→SECAM converter circuit 30 in Figure 2. When the luminance signal is so delayed, the delay time of the chrominance signal relative to the luminance signal can be reduced to 0.5 H even in the second manner of use above described.

Delaying of the luminance signal by 1 H in the SECAM→PAL converter circuit of the recording side may also be considered. However, delaying of the luminance signal in this circuit is not described in view of the fact that the delay time must be standardized.

Figure 5 shows the structure of one form of the SECAM→PAL converter circuit. Referring to Figure 5, a SECAM signal applied to an input terminal 48 is demodulated by an FM demodulating circuit 49 into line sequential B—Y and R—Y signal components. The demodulated SECAM signal is applied to a PAL modulating circuit 50 to be used to modulate a subcarrier applied to an input terminal 53. The subcarrier is then applied to a 1 H switching circuit 51 directly and indirectly through a phase processing circuit 52 which shifts the phase of the subcarrier by 90°. Thus, the subcarrier phase-shifted by 90° and not phase-shifted is applied through the 1 H switching circuit 51 to the PAL modulating circuit 50 at time intervals of 1 H, so that the modulated PAL signal including the line sequential B—Y and R—Y signal components appears from the PAL modulating circuit 50. The modulated signal is then delayed by 1 H in a 1 H delay circuit 54. The output signal from the delay circuit is applied to an adder circuit 55 to be added to the original none-delayed signal, and is also applied to a subtractor circuit 56 to be subtracted from the original un-delayed signal. The output signals from the adder circuit 55 and subtractor circuit 56 are applied to another 1 H switching circuit 57 to appear alternately therefrom at time intervals of 1 H, so that the SECAM→PAL converted signal appears at an output terminal 58.

Figure 6 shows the structure of another form of the SECAM→PAL converter circuit. A modulated pulse signal is applied to an input terminal 59. In Figure 6 the function of the subtractor circuit 56 in the combination of the circuits 55, 56 and 57 in Figure 5 is replaced by a polarity inverter circuit 60, and the SECAM→PAL converted signal appears at an output terminal 58.

Figure 7 shows the structure of still another form of the SECAM→PAL converter circuit. The structure shown in Figure 7 is a modification of the structure shown in Figure 6.

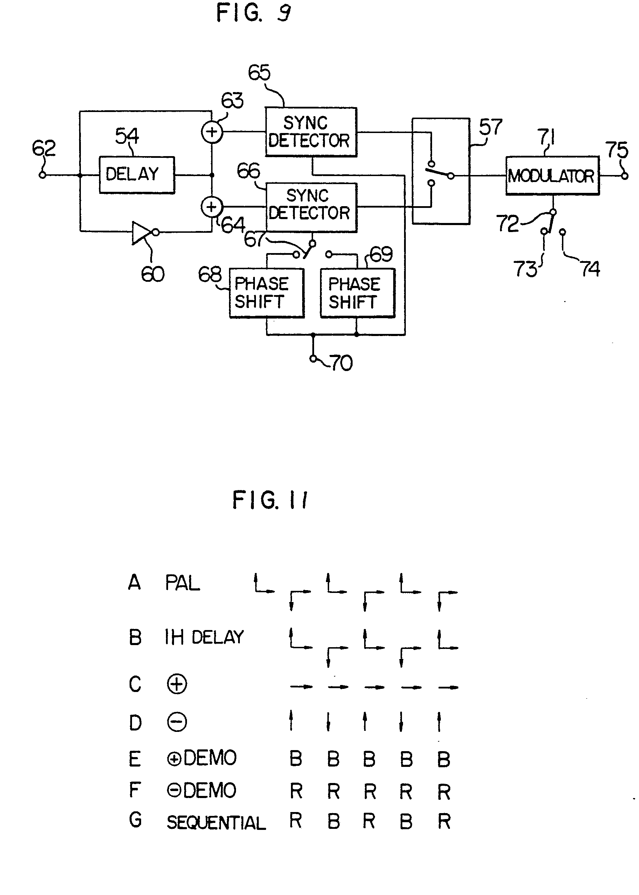

Figure 8 shows the structure of yet another form of the SECAM→PAL converter circuit. The structure shown in Figure 8 is a modification of the structure shown in Figure 7. The structure shown in Figure 8 is featured by the fact that the luminance signal 61 is applied to the signal path between the 1 H switching circuit 57 and the 1 H delay circuit 54 so as to compensate the delay of the chrominance signal relative to the luminance signal due to passing through the delay circuit.

This relative C/Y delay becomes always a problem when a delay circuit is included in the chrominance signal processing circuit. Therefore, the system converter circuit may also be constructed to pass the luminance signal through a delay circuit so as to compensate this relative C/Y delay.

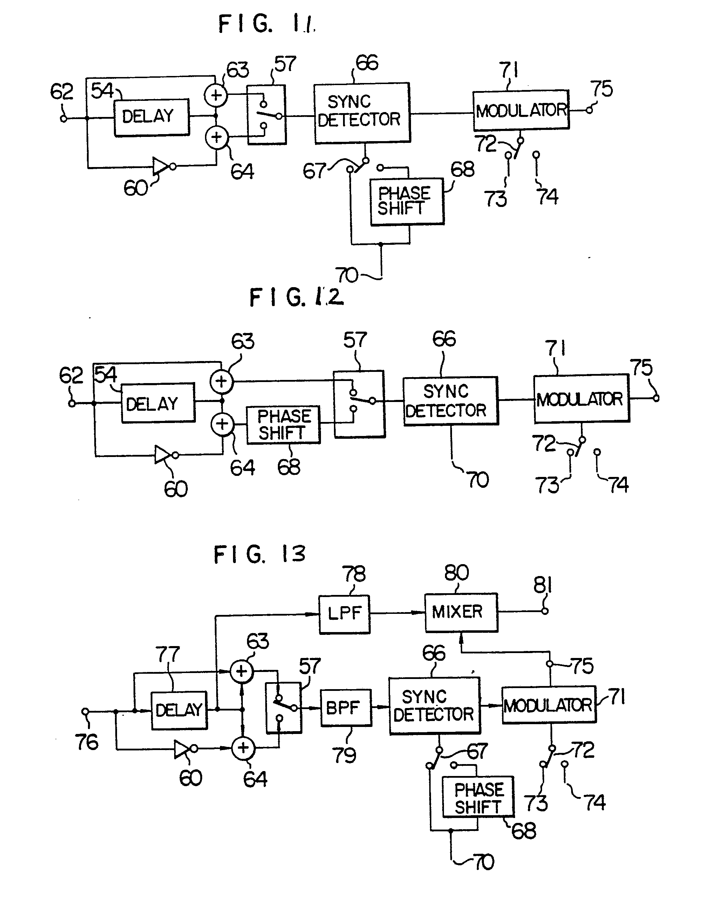

Figure 9 shows the structure of one form of the PAL→SECAM converter circuit. Referring to Figure 9, a PAL signal applied to an input terminal 62 is applied to the combination of a 1 H delay circuit 54, a polarity inverter circuit 60 and adder circuits 63, 64 in which the adjacent lines are added and subtracted, so that the signal is separated into R—Y and B—Y signal components as shown in Figure 10A. The separated signal components are applied to synchronous detector circuits 65 and 66 to be subjected to synchronous detection by a subcarrier applied from an input terminal 70. The synchronous detector circuit 65 detects the B—Y signal component, and the synchronous detector circuit 66 detects the R—Y signal component. The subcarrier applied to the latter detector circuit 66 is subjected to phase shifts of 90° and −90° by phase processing circuits 68 and 69 respectively and is then switched over by a line switch 67. The detected signal components are applied to a 1 H switching circuit 57 to be converted into a line sequential signal of B—Y and R—Y signal components, and such a signal is applied to an FM modulating circuit 71. A 1 H switching circuit 72 is changed over to apply different subcarriers 73 and 74 to the FM modulating circuit 71, so that a SECAM chrominance signal having different carrier frequencies in alternate lines appears at an output terminal 75.

Figure 10 shows the signals appearing at the various parts of Figure 9. Figure 10A shows the chrominance signal applied to the input terminal 62, Figure 10B shows the output signal from the 1 H delay circuit 54, Figure 10C shows the output signal from the adder circuit 63, Figure 10D shows the output signal from the adder circuit 64, Figure 10E shows the output signal from the synchronous detector circuit 65, Figure 10F shows the output signal from the synchronous detector circuit 66, and Figure 10G shows the output signal from the 1 H switching circuit 57.

The phase of the R—Y signal component of the PAL signal is changed over by 180° at time intervals of 1 H, and, when the PAL signal is converted into the SECAM signal, the R—Y signal component thereof appears at time intervals of 1 H. Consequently, the signal thus appearing has the phase of fixed direction. Therefore, one of the two phase processing circuit 68 and 69 may be dispensed with.

Figure 11 shows the structure of another form of the PAL→SECAM converter circuit. The structure shown in Figure 11 is a modification of the structure shown in Figure 9. In Figure 11, there are only one phase processing circuit 68 and only one synchronous detector circuit 66. More precisely, the circuits 69 and 65 are eliminated by modifying so that the synchronous detection carried out for each of the B—Y and R—Y signal components in Figure 9 is replaced by an arrangement in which the 1 H switching circuit 57 is disposed in the stage preceding the single synchronous detector circuit 66.

Figure 12 shows the structure of still another form of the PAL→SECAM converter circuit. The structure shown in Figure 12 is a modification of that shown in Figure 11. Referring to Figure 12, the phase processing circuit 68 is inserted between the adder circuit 64 and the 1 H switching circuit 57 so as to apply a single subcarrier to the synchronous detector circuit 66.

Although the conversion of the chrominance signal is only referred to in Figures 11 and 12, a 1 H delay circuit may be inserted in the luminance signal circuit when compensation of the aforementioned delay of the chrominance signal relative to the luminance signal is desired in Figures 11 and 12. Since such a 1 H delay circuit to be inserted requires a bandwidth ranging from 0 MHz to 3 MHz, it is preferable to employ a CCD (charge coupled device). The clock frequency suitable for driving this CCD is to be 2 fsc (fsc: chrominance subcarrier frequency ≒4.43 MHz) from the required bandwidth. The required bandwidth of the 1 H delay circuit 54 for the chrominance signal is about 4.43±1.0 MHz, and a glass delay line is suitable for this purpose.

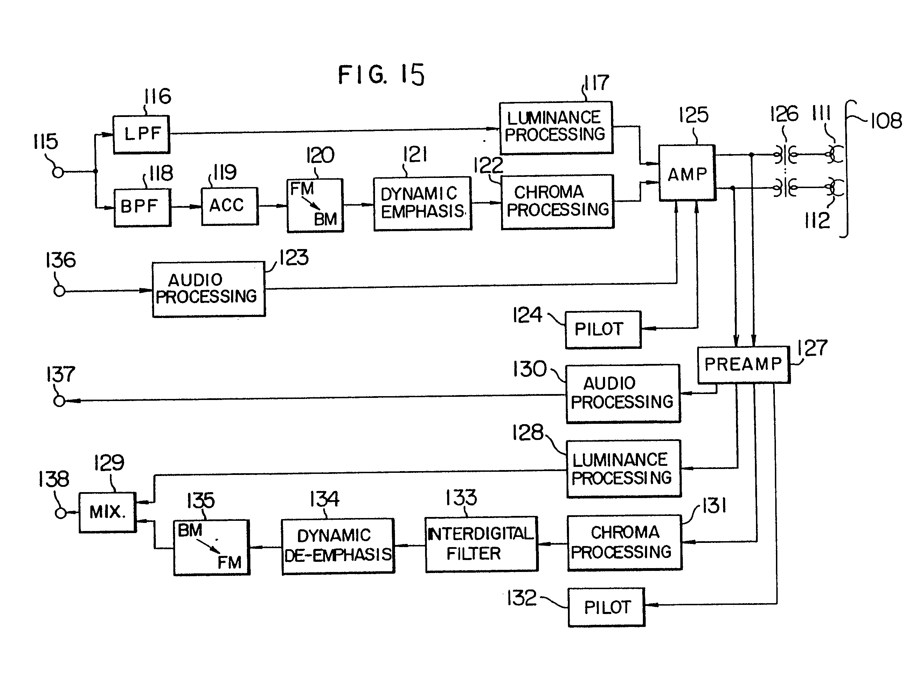

Figure 13 shows the structure of one form of the PAL→SECAM converter circuit which converts a PAL composite video signal into a SECAM signal and which has the delay compensating function above described.

This difference between the structure shown in Figure 13 and that shown in Figure 11 will now be described. Referring to Figure 13, a PAL composite video signal is applied to an input terminal 76. A delay circuit 77 delays the composite video input signal by about 1 H, and its required bandwidth is from 0 MHz to 5 MHz. It is preferable to employ a CCD driven by a clock frequency of 3 fsc.

An LPF 78 is a filter for removing the chrominance signal from the composite video signal. A BPF 79 is a filter for extracting the chrominance signal from the composite video signal. In a mixer circuit 80, the luminance signal and the chrominance signal are mixed to appear as a SECAM composite video signal.

The PAL→SECAM converter circuit shown in Figure 13 has the circuit structure simplified by delaying the luminance signal by 1 H so that the chrominance signal and the luminance signal have the same delay time and also by delaying the luminance signal and the chrominance signal simultaneously by the wide-band 1 H delay circuit of CCD structure.

In recording a color television signal on a magnetic tape by a VTR, it is necessary to take into account the recording period of time and the S/N ratio of the recorded signal.

The required S/N ratio has two values. In one of the two cases, the dubbing margin is required, and the S/N ratio is desirably selected to be about 48 dB. In such a case, the S/N ratio of a signal recorded and reproduced once is about 48 dB, and the S/N ratio of the signal obtained by recording and reproducing the reproduced signal again is about 45 dB. This manner of use of the VTR is a standard one when the VTR is combined with a television camera.

In the other case, the S/N ratio is selected to be about 45 dB, and the dubbing margin is not taken into account. This manner of use of the VTR is a standard one when the VTR is used for recording of a television program, for example.

Therefore, according to the first manner of use, $\alpha H = 2.0$ and the recording period of time is 90 minutes, and, according to the second manner of use, $\alpha H = 1.0$, and the recording period of time is 180 minutes. The above values improve the balance between the VTR usage and the recording period of time.

Figure 14 is a tape pattern diagram when the value of $\alpha H$ is selected to be $\alpha H = 2.0$ or $\alpha H = 1.0$, and two video heads are disposed to be angularly spaced apart by 180° exactly. In Figure 14, a magnetic tape designated by the numeral 108 travels in a direction as shown by the arrow 106, and obliquely extending video tracks 103, 104 and 105 are formed on the magnetic tape 108. The arrow 107 indicates the moving direction of the magnetic heads. The numeral 104 designates the video track width $T_P$, and 109 designates the $\alpha H$ representing the number of non-aligned horizontal synchronizing signals.

The feature of the tape pattern shown in Figure 14 is that both of the H alignment and the chrominance alignment do not exist. The problem arisen from the absence of the chrominance alignment can be solved by converting the FM chrominance signal into a balanced-modulation chrominance signal. However, the principal problem arisen from the absence of the H alignment is the interference by the burst signal leaking into the video heads from the adjacent tracks 104 and 105 during reproduction of the record recorded on the track 103. A special countermeasure is therefore required for dealing with such a problem.

In the horizontal period 101 having the symbol * in Figure 15, R—Y signal is recorded when the FM chrominance signal is converted into a balanced-modulation chrominance signal, and, in the horizontal period 102 not having the symbol *, the B—Y signal is recorded. On the other hand, when the FM chrominance signal is converted into a PAL chrominance signal, the (R—Y) signal is recorded in the period 101, and the —(R—Y) signal is recorded in the period 102.

Figure 15 shows the structure of an embodiment of the chrominance signal recording and reproducing apparatus of the present invention which minimizes appearance, on a reproduced picture, of the burst signal leaking into the video heads from the tracks adjacent to the track being reproduced.

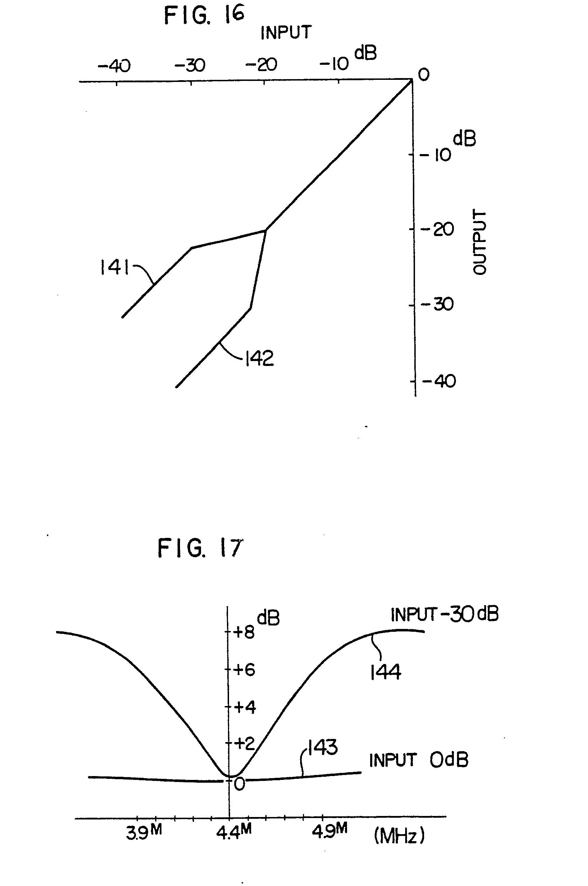

Suppression of interference by the burst signal will now be described with reference to Figure 16.

Referring to Figure 15, a composite video signal applied to an input terminal 115 is separated into a luminance signal and a chrominance signal by an LPF 116 and a BPF 118 respectively. The separated chrominance signal is applied to an ACC (automatic chroma control) circuit 119 to be stablized or maintained at a predetermined level and is then applied to an FM→BM converter circuit 120 which converts the FM chrominance signal into a balanced-modulation chrominance signal, so that the chrominance input signal is converted into, for example, a PAL chrominance signal. The PAL chrominance signal is applied from the circuit 120 to a dynamic emphasis circuit 121 which emphasizes small-amplitude portions of the input signal, and the output signal from the dynamic emphasis circuit 121 is applied to a recording chrominance signal processing circuit 122 to be subjected to processing including burst emphasis and frequency conversion.

The characteristic curve 141 in Figure 16 represents the input-output characteristic of one form of the dynamic emphasis circuit 121, and it will be seen that small signal amplitude portions of about −20 dB to −30 dB are emphasized by about 8 dB.

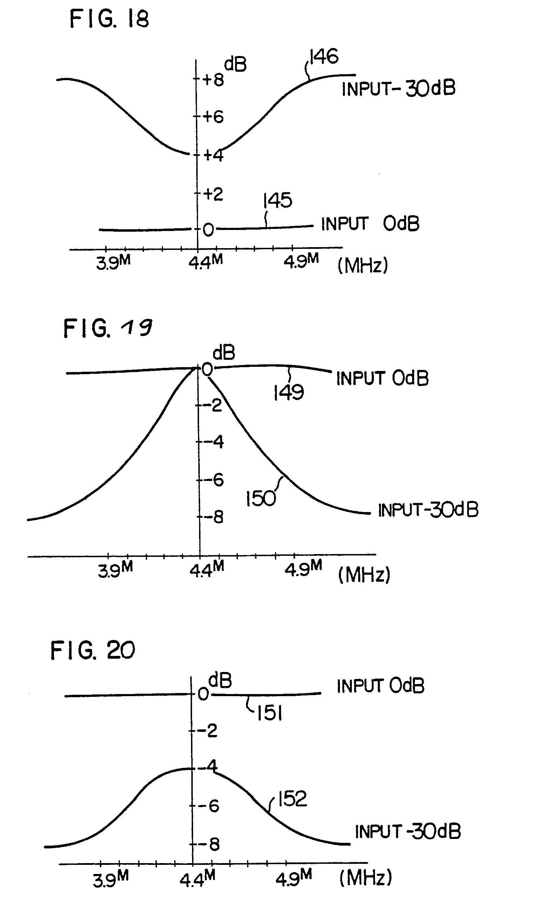

The frequency characteristic (especially, the input level dependence) of the dynamic emphasis circuit 121 may be as shown in Figure 17 or Figure 18. According to the characteristic shown in Figure 17 only the energy of the side bands of the modulated chrominance signal is emphasized only. This method is effective for suppressing the beat resulting from leakage of a pilot signal P and an FM audio signal A, multiplexed with the chrominance signal C, into the chrominance signal C. When the emphasis is such that it is not dependent upon the input signal level, the emphasis is applicable to the FM chrominance signal. However, the dynamic emphasis is not applicable to the FM chrominance signal because, according to the dynamic emphasis, the lower the input signal level, the greater is the amount of emphasis.

Therefore, when the pilot signal P and the FM audio signal A are to be recorded in a frequency multiplex mode on a magnetic tape at positions adjacent to the recording position of the chrominance signal C in respect of frequency, it is essentially required to convert the FM chrominance signal into a BM chrominance signal and then to apply the dynamic emphasis to the BM chrominance signal, to ensure sufficient color quality.

The emphasis characteristic shown in Figure 19 intends to minimize appearance, on a reproduced picture, of the burst signal leaking from the tracks adjacent to the track being reproduced and intends also to suppress the aforementioned interference by the signals including the pilot signal P.

The interference due to leakage of the burst signal from the adjacent tracks is quite marked when the H alignment is absent as shown in Figure 15, and, therefore, the dynamic emphasis shown in Figure 17 or 18 is required.

Returning to Figure 15, the output signal from the recording chrominance signal processing circuit 122 is applied to a recording signal amplifier 125 to be added therein to the FM luminance signal Y applied through the LPF 116 and a recording luminance signal processing circuit 117, and, after amplification, the output signal from the amplifier 125 is applied through a rotary transformer 126 to video heads 111 and 112 to be recorded on a video tape 108.

The audio signal applied to an audio input terminal 136 is converted into the FM audio signal A by a recording audio signal processing circuit 123, and the pilot signal P is generated from a pilot signal generating circuit 124. The FM audio signal A and the pilot signal P are added to the FM luminance signal Y and the PAL chrominance signal C in the recording signal amplifier 125 in which the composite signal is amplified.

The playback operation of the apparatus shown in Figure 15 will now be described. The signal reproduced by the video heads 111 and 112 passes through the rotary transformer 126 and a preamplifier 127 to be applied to a reproduced luminance signal processing circuit 128, to a reproduced audio signal processing circuit 130, to a reproduced chrominance signal processing circuit 131 and to a pilot signal processing circuit 132. The audio signal, luminance signal and pilot signal are processed in the usual manner, and explanation of the manner of processing of these signals is unnecessary.

The reproduced chrominance signal processing circuit 131 includes a frequency converter circuit for restoring the low-band converted chrominance signal to the original chrominance signal having the center frequency of 4.4 MHz and a burst de-emphasis circuit. The output signal from this circuit 131 includes a cross-talk signal from the adjacent tracks. Therefore, the output signal from the circuit 131 is applied to a comb filter 133 which suppresses this crosstalk signal. The emphasized burst signal is the component of the cross-talk signal which provides especially a source of interference. The burst signal is used as the time base when the chrominance signal is recorded and reproduced in a balanced modulation form. It is therefore necessary to record the burst signal at as high a level as possible within the allowable dynamic range of a video tape. Since the recording level of the chrominance signal is limited by the cross modulation characteristic attributable to the nonlinearity of the tape-head system, the burst signal only is emphasized by about 6 dB in the record mode.

Consequently, when a tape pattern including the absence of the H alignment as shown in Figure 14 is employed, the crosstalk burst signal tends to appear at substantially the central area of the reproduced picture in a band form which leads to poor reproduction. The level of the crosstalk burst signal may be about −6 dB relative to the highest level of the reproduced chrominance signal. This crosstalk signal level is suppressed by 20 dB to 26 dB by the interdigital filter 133 until the value of D/U is given by D/U=26 dB to 32 dB in the output signal from the comb filter 133.

The input-output characteristic of a dynamic de-emphasis circuit 134 connected to the output of the comb filter 133 may be selected to be represented by, for example, the characteristic curve 142 in Figure 16. When so selected, the circuit 134 can suppress the level of a low-level input signal (lower than −20 dB in input level) by about 6 dB to 8 dB. Thus, the crosstalk signal level suppressed to about −26 dB to −32 dB while passing through the interdigital filter 133 is further suppressed by 6 dB to 8 dB in the dynamic de-emphasis circuit 134, and, finally, the value of D/U in the output signal from the dynamic de-emphasis circuit 134 is given by D/U=32 dB to 40 dB. Therefore, in order to effectively suppress the crosstalk signal level by the dynamic de-emphasis circuit 134, it is necessary to sufficiently suppress the crosstalk signal level in the comb filter 133 prior to the level suppression in the dynamic de-emphasis circuit 134. It is therefore desirable that the de-emphasis in the dynamic de-emphasis circuit 134 is not applied to the low-converted frequency band as, for example, shown by

$$(47-\frac{1}{8})f_H \fallingdotseq 720 \text{ kHz}$$

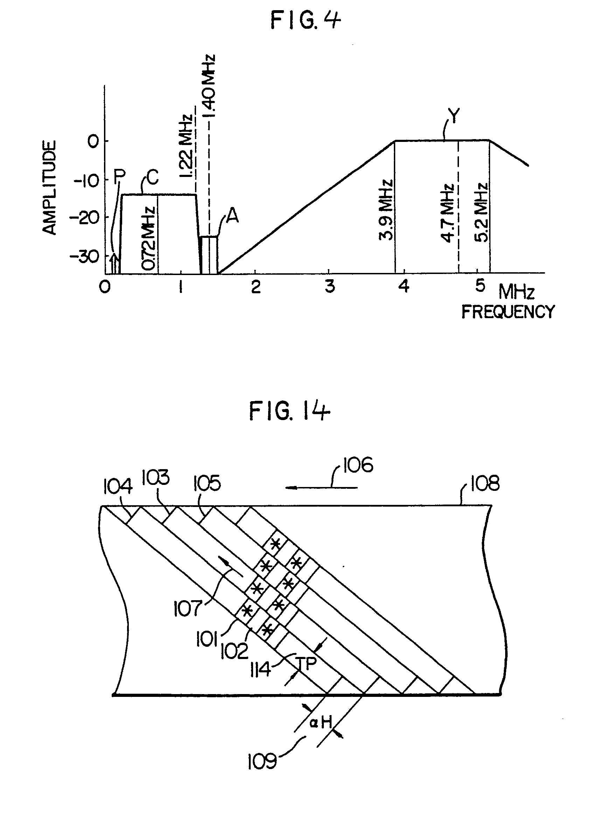

in Figure 4 but applied to the frequency band of 4.4 MHz. Therefore, it is also desirable that the emphasis in the dynamic emphasis circuit 121, which is inverse to the dynamic de-emphasis circuit 134, is also applied to the frequency band of 4.4 MHz. The comb filter 133 includes a 2 H delay line adapted to delay the input in the frequency band of 4.4 MHz. The output signal from the dynamic de-emphasis circuit 134 is applied to a BM→FM converter circuit 135 to be converted into a SECAM FM signal, and this SECAM signal is mixed in a mixer circuit 129 to the luminance signal to appear at a video output terminal 138 as a SECAM composite video signal. Figures 19 and 20 show the input-output characteristic of the dynamic de-emphasis circuit 134 and correspond to Figures 17 and 18 respectively.

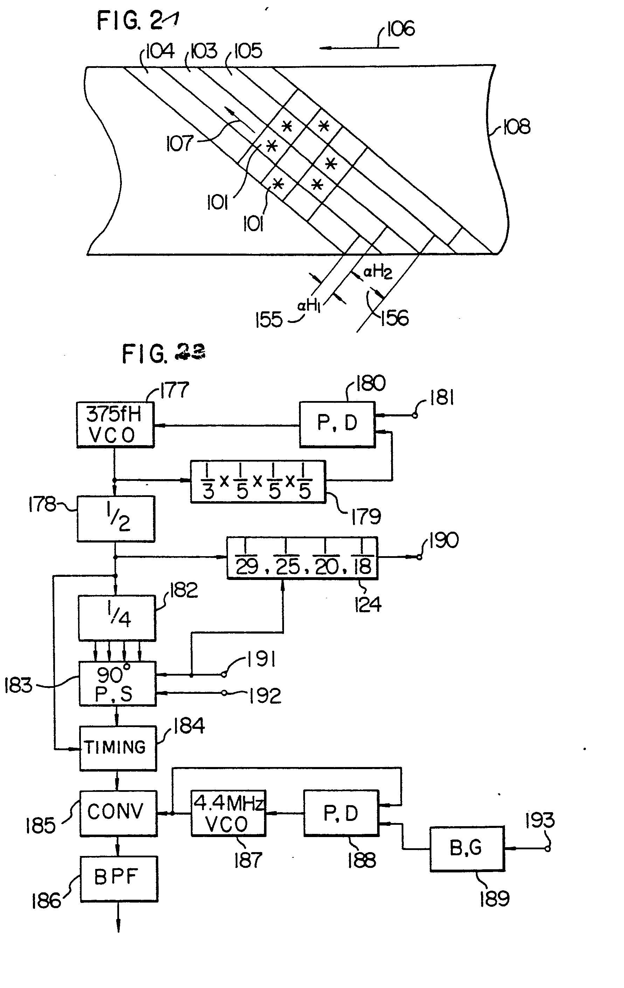

Figure 21 is a tape pattern diagram showing a signal pattern when the value of αH is selected to be αH=1.0, and the angle θ between the two video heads is selected to be

$$\theta = (180 - \frac{180}{625})°.$$

In Figure 21, the numerals 155 and 156 designate different values of αH when the angle θ is so selected. The value of αH 155 between the tracks 103 and 104 is given by $\alpha H_1 = 1.0\ H - 0.5\ H = 0.5\ H$, and the value of αH 156 between the tracks 103 and 105 is given by

$$\alpha H_2 = 1.0\ H + 0.5\ H = 1.5\ H.$$

It will be seen in Figure 21 that there is no chrominance alignment between the tracks 104 and 103, but there is the chrominance alignment between the tracks 103 and 105. There is the H alignment between all of these tracks 103, 104 and 105. Thus, when the tape pattern shown in Figure 21 is employed, the crosstalk burst signal from the adjacent tracks does not appear on the reproduced picture and appears only in the horizontal blanking period without giving rise to the aforementioned problem. It is therefore desirable that the input-output characteristic of the dynamic emphasis circuit 121 is so selected that the interference by the pilot signal and FM audio signal can be easily suppressed.

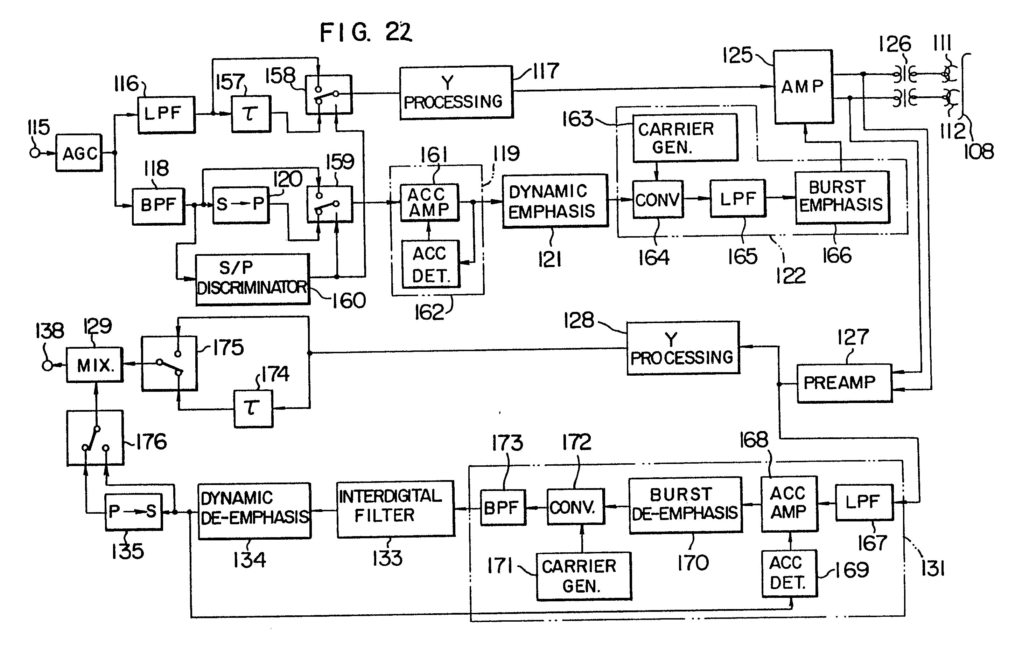

Figure 22 is a circuit diagram of another embodiment of the apparatus of the present invention which records and reproduces not only a SECAM signal but also a PAL signal.

Referring to Figure 22, delay compensation circuits 157 and 174, switches 158, 159, 175 and 176, a SECAM→PAL converter circuit 120, a SECAM/PAL discrimination circuit 160 and a PAL→SECAM converter circuit 135 are changed over or selectively operated depending when the apparatus operates as either a PAL video tape recorder or a SECAM video tape recorder. Other parts are basically the same as the corresponding parts in Figure 15 in that the embodiment shown in Figure 22 is a modification of that shown in Figure 15.

In Figure 22, the ACC circuit 119 includes a variable-gain or ACC amplifier 161 and an ACC detector 162. This ACC detector 162 makes amplitude detection of the burst signal applied to the dynamic emphasis circuit 121, so that the level of the input to the dynamic emphasis circuit 121 can be maintained constant. The recording chrominance signal processing circuit 122 includes a carrier generator 163, a frequency converter 164, an LPF 165 and a burst emphasis circuit 166. The reproduced chrominance signal processing circuit 131 includes an LPF 167, a variable-gain or ACC amplifier 168, a burst signal or ACC detector 169, a burst de-emphasis circuit 170, a carrier generator 171, a frequency converter 172 and a BPF 173.

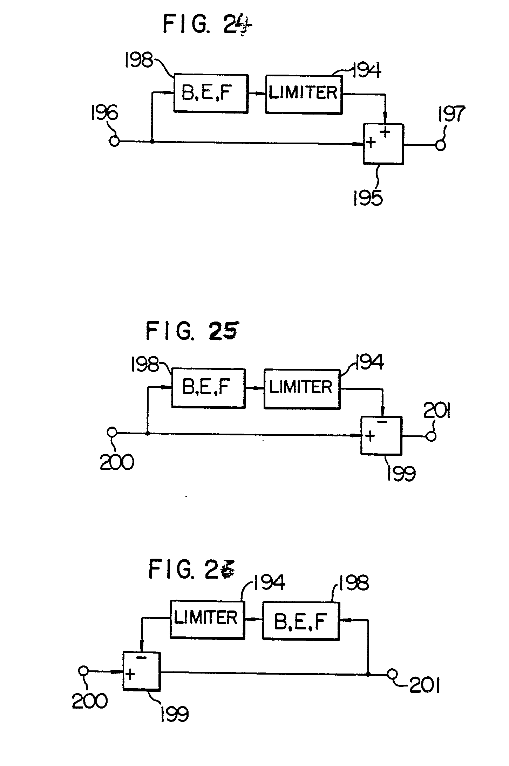

Figure 23 is a block diagram showing the structure of one form of the carrier generator 163 (Figure 22). The carrier generator 163 shown in Figure 23 is constructed so that the chrominance signal recorded on a video tape has the frequency of

$$(47 - \frac{1}{8})f_H$$

for the reason described already.

Referring to Figure 23, the carrier generator 163 includes a 375 $f_H$ VCO 177 oscillating at a frequency of 375 $f_H$, a 1/2 frequency divider 178, a

$$\frac{1}{375}(=\frac{1}{3} \times \frac{1}{5} \times \frac{1}{5} \times \frac{1}{5})$$

frequency divider 179, a phase comparator 180 detecting the frequency difference between the output signal from the frequency divider 179 and the horizontal synchronizing signal applied to an input terminal 181, and a pilot signal generating circuit 124. The circuit 124 includes four frequency dividers, that is, a 1/29 frequency divider, a 1/25 frequency divider, a 1/20 frequency divider and a 1/18 frequency divider. Therefore, a pilot signal having four frequencies of

$$\frac{375}{58}f_H = 6.466f_H = 101.0\ \text{kHz,}$$

$$\frac{375}{50}f_H = 7.50$$

$$f_H = 117.2\ \text{kHz,}$$

$$\frac{375}{40}f_H = 9.375\ f_H = 146.5\ \text{kHz,}$$

and

$$\frac{375}{36}f_H = 10.417\ f_H = 162.8\ \text{kHz}$$

appears at an output terminal 190. The carrier generator 163 further includes a 1/4 frequency divider 182 and a 90° phase-shift circuit 183. Four signals whose frequency is

$$\frac{375}{4}f_H$$

and which have four phases of 0°, 90°, 180° and 270° appear at the output of the 1/4 frequency divider 182. The 90° phase-shift circuit 183 does not make any phase shift in the first field but advances or delays the phase by 90° at time intervals of 1 H in the second field. A pulse signal of field frequency (25 Hz for each of the SECAM and PAL signals) is applied to a pulse input terminal 191, and a pulse signal of horizontal frequency (15.625 kHz for each of the PAL and SECAM signals) is applied to another pulse input terminal 192. The carrier generator 163 further includes a wave shaping circuit 184 which has the function of regulating the rising timing of the output signal from the 90° phase-shift circuit 183 thereby ensuring the phase difference of 90° in alternate horizontal scanning periods H. A carrier signal of continuous phase at the frequency of

$$\frac{375}{8}f_H = (47 - \frac{1}{8})f_H$$

appears at the output of the wave shaping or timing circuit 184 in the first field, and this carrier signal of frequency

$$(47 - \frac{1}{8})f_H$$

is phase-shifted by 90° in alternate horizontal scanning periods H in the second field. The carrier generator 163 further includes the combination of a 4.43-MHz VCO187, a phase comparator 188, a burst gate 189 and a burst signal input terminal 193 constituting a phase locked loop to generate a continuous carrier of 4.43 MHz. A frequency converter 185 is connected at its input terminals to the timing circuit 184 and 4.43-MHz VCO 187 and at its output terminal to a BPF 186 from which an output signal at the frequency of

$$\{4.43 + (47 - \frac{1}{8})f_H\}$$

appears.

Figure 24 shows the structure of one form of the dynamic emphasis circuit employed in the present invention. Referring to Figure 24, the dynamic emphasis circuit includes an input terminal 196, an output terminal 197, a limiter 194, an adder 195 and a band elimination filter 198. The emphasis characteristic shown in Figure 17 or 18 can be achieved by suitable design of the circuit constants of the structure shown in Figure 24.

Figures 25 and 26 show the structure of two forms of the dynamic de-emphasis circuit employed in the present invention. As shown in Figures 25 and 26, the dynamic de-emphasis circuit includes an input terminal 200, an output terminal 201, a limiter 194, a band elimination filter 198 and a subtractor 199. The characteristic shown in Figure 19 or 20 can be realized by suitably selecting the circuit constants of the circuits shown in Figures 25 and 26.

According to the recording and reproducing apparatus of the present invention, a SECAM chrominance signal may be converted into a balanced-modulation chrominance signal represented by a PAL chrominance signal, whereby the frequencies of the chrominance signal recorded on adjacent tracks of a video tape have the interleave relation (in which the frequency difference is

$$\frac{f_H}{4}(2n-1),$$

where n is an integer), and the crosstalk signal from the adjacent tracks can be suppressed in the playback mode by inserting a comb filter in the reproducing circuit.

Therefore, the undesirable crosstalk interference from the adjacent tracks need not be taken into consideration, and the value of αH can be freely selected on the basis of the required S/N ratio and the required recording period of time. In a VTR system in which the diameter of the cylinder is 40 mm and the tape width is 8 mm, the value of αH can be selected to be αH=2.0 H or αH=1.0 H. The dynamic emphasis is the technique utilized for improving the color picture quality, and, for the effective utilization of the dynamic emphasis, direct application of a SECAM chrominance signal is not suitable, and it is required to convert such a signal into a balanced-modulation chrominance signal such as a PAL chrominance signal.

When a chrominance signal, a pilot signal and an FM audio signal are recorded on video tracks in frequency multiplex mode, the pilot signal and the FM audio signal interfere with the chrominance signal in the playback mode. The dynamic emphasis and dynamic de-emphasis are quite effective for the suppression of interference by these signals.

Therefore, in a VTR system in which neither the chrominance alignment not the H alignment on a video tape is employed, and a chrominance signal and an FM luminance signal are recorded on the tape together with a pilot signal and an FM audio signal in frequency multiplex mode, it is necessary to convert a SECAM chrominance signal into a balanced-modulation chrominance signal represented by a PAL chrominance signal and then to apply the dynamic emphasis to the SECAM→PAL converted signal.

On the other hand, in order that the dynamic de-emphasis in the reproducing circuit can be effective, it is necessary that the chrominance signal is applied to the dynamic de-emphasis circuit after the crosstalk components from the adjacent tracks have been sufficiently suppressed by comb filter. Therefore, it is desirable that the reproducing circuit includes a comb filter, a dynamic de-emphasis circuit and a PAL→SECAM converter circuit arranged in the above order.

According to the present invention, the optimum S/N ratio and optimum recording period of time can be set as desired since the tape speed can be selected as desired without taking into account both of the H alignment and the chrominance alignment. Further, according to the present invention, the pilot signal and FM audio signal can be frequency multiplexed with the chrominance signal and FM luminance signal without adversely affecting the color picture quality and luminance signal band, thereby greatly improving the video-tracking performance and sound quality.

## Claims

1. A colour video signal recording and reproducing apparatus of the type which includes means for separating a luminance signal and a chrominance signal from a colour television input signal, and for converting the frequency band of said chrominance signal into a range lower than that of said luminance signal for the purpose of recording said chrominance signal and said luminance signal on a magnetic tape in frequency multiplex mode, characterised in that said apparatus includes filter means (5, 6; 116, 118) for separating a SECAM chrominance signal and a luminance signal from a SECAM colour television signal, converter means (7; 120) for converting said SECAM chrominance signal into a PAL chrominance signal, processing means (10; 112) for converting the frequency band of said PAL chrominance signal into a range lower than that of said luminance signal, and recording means (14—16; 112, 113, 125, 126) for recording said frequency-converted PAL chrominance signal and said luminance signal on a magnetic tape in frequency multiplex mode.

2. A colour video signal recording and reproducing apparatus of the type which includes means for separating a luminance signal and a chrominance signal from a colour television input signal, and for converting the frequency band of said chrominance signal into a range lower than that of said luminance signal for the purpose of recording said chrominance signal and said luminance signal on a magnetic tape in frequency multiplex mode, characterised in that, said apparatus includes means (120) for converting a chrominance signal in a SECAM television signal into a balanced modulation signal, a dynamic emphasis circuit (121) provided in the succeeding stage to said converting means (120), a comb filter (133) for suppressing a crosstalk signal from the tracks adjacent to a track being reproduced in replay mode, and a dynamic de-emphasis circuit (134) provided in the succeeding stage of said comb filter (133).

3. A colour video signal recording and reproducing apparatus for converting a SECAM color video signal into a PAL color video signal in which a frequency-modulated chrominance signal and an amplitude-modulated luminance signal are separated from said SECAM color video signal including said chrominance signal and said luminance signal, said separated luminance signal is converted into a frequency-modulated luminance signal, said separated chrominance signal is converted into an amplitude-modulated chrominance signal, and a frequency band of said amplitude-modulated chrominance signal is converted into a range lower than a frequency band of said frequency-modulated luminance signal for the purpose of recording said frequency-modulated luminance signal and said amplitude-modulated chrominance signal on a magnetic tape;

characterized in that the apparatus includes:

a dynamic emphasis circuit (121) for emphasizing small amplitude portions of said amplitude-modulated chrominance signal, said dynamic emphasis circuit (121) being connected to a succeeding stage of a signal converting means (120) for converting said frequency-modulated chrominance signal into said amplitude-modulated chrominance signal,

a first chrominance signal processing circuit (122) for converting a frequency band of a carrier wave of said amplitude-modulated chrominance signal into a range lower than said frequency band of said frequency-modulated luminance signal, said first chrominance signal processing circuit (122) being connected to a succeeding stage of said dynamic emphasis circuit (121),

a preamplifier (127) for amplifying said frequency-modulated luminance signal and said amplitude-modulated chrominance signal reproduced from said magnetic tape (108),

a luminance signal processing circuit (128) for demodulating said frequency-modulated luminance signal, luminance signal processing circuit (128) being connected to a succeeding stage of said preamplifier (127),

a second chrominance signal processing circuit (131) for converting said frequency band of said carrier wave of said amplitude-modulated chrominance signal into a range higher than said frequency band of said frequency-modulated luminance signal, said second chrominance signal processing circuit (131) being connected to said preamplifier (127),

a comb filter (133) for removing crosstalk signals from said amplitude-modulated chrominance signal, said filter (133) being connected to a succeeding stage of said second chrominance signal processing circuit (131), and

a dynamic de-emphasis circuit (134) for reducing small amplitude portions of said amplitude-modulated chrominance signal, said dynamic de-emphasis circuit (134) being connected to a succeeding stage of said filter (133).

## Patentansprüche

1. Farbvideosignal-Aufzeichnungs- und -Wiedergabeeinrichtung mit Mitteln zum Abtrennen eines Leuchtdichtesignals und eines Farbartsignals von einem Farbfernseh-Eingangssignal und zum Umsetzen des Frequenzbandes des Farbartsignals in einen gegenüber dem Frequenzband des Leuchtdichtesignals niedrigeren Bereich zum Zweck des Aufzeichnens des Farbartsignals und des Leuchdichtesignals auf einem Magnetband in Frequenzmultiplextechnik, dadurch gekennzeichnet, daß die Einrichtung Filtermittel (5, 6; 116, 118) zum Abtrennen eines SECAM-Farbartsignals und eines Leuchtdichtesignals von einem SECAM-Farbfernsehsignal, Konvertermittel (7; 120) zum Umsetzen des SECAM-Farbartsignals in ein PAL-Farbartsignal, Verarbeitungsmittel (10; 112) zum Umsetzen des Frequenzbandes des PAL-Farbartsignals in einen gegenüber dem Frequenzband des Leuchtdichtesignals niedrigeren Bereich und Aufzeichnungsmittel (14—16; 112, 113, 125, 126) zum Aufzeichnen des frequenzumgesetzten PAL-Farbartsignals und des Leuchtdichtesignals auf einem Magnetband in Frequenzmultiplextechnik enthält.

2. Farbvideosignal-Aufzeichnungs- und -Wiedergabeeinrichtung mit Mitteln zum Abtrennen eines Leuchtdichtesignals und eines Farbartsignals von einem Farbfernseh-Eingangssignal und zum Umsetzen des Frequenzbandes des Farbartsignals in einen gegenüber dem Frequenzband des Leuchtdichtesignals niedrigeren Bereich zum Zweck des Aufzeichnens des Farbartsignals und des Leuchdichtesignals auf einem Magnetband in Frequenzmultiplextechnik, dadurch gekennzeichnet, daß die Einrichtung Mittel (120) zum Umsetzen eines Farbartsignals in einem SECAM-Fernsehsignal in ein Balancemodulationssignal, eine in der auf die Umsetzermittel (120) folgenden Stufe vorgesehene dynamische Anhebungsschaltung (121), ein Kammfilter (133) zum Unterdrücken eines Übersprechsignals von den der in der Wiedergabebetriebsart wiedergegebenen Spur benachbarten Spuren und eine in der auf das Kammfilter (133) folgenden Stufe vorgesehene dynamische Absenkungsschaltung (134) enthält.

3. Farbvideosignal-Aufzeichnungs- und -Wiedergabeeinrichtung zum Umsetzen eines SECAM-Farbvideosignals in ein PAL-Farbvideosignal, in welcher ein frequenzmoduliertes Farbartsignal und ein amplitudenmoduliertes Leuchtdichtesignal von dem das Farbartsignal und das Leuchtdichtesignal enthaltenden SECAM-Farbvideosignal abgetrennt werden, wobei das abgetrennte Leuchtdichtesignal in ein frequenzmoduliertes Leuchtdichtesignal und das abgetrennte Farbartsignal in ein amplitudenmoduliertes Farbartsignal umgesetzt wird und ein Frequenzband des amplitudenmodulierten Farbartsignals zum Zwecke des Aufzeichnens des frequenzmodulierten Leuchtdichtesignals und des amplitudenmodulierten Farbartsignals auf einem Magnetband in einen gegenüber einem Frequenzband des frequenzmodulierten Leuchtdichtesignals niedrigeren Bereich umgesetzt wird, dadurch gekennzeichnet, daß die Einrichtung eine dynamische Anhebungsschaltung (121) zum Anheben von eine kleine Amplitude aufweisenden Teilen des amplitudenmodulierten Farbartsignals, welche Schaltung (121) mit einer nachfolgenden Stufe eines Signalkonverters (120) zum Umsetzen des frequenzmodulierten Farbartsignals in das amplitudenmodulierte Farbartsignal verbunden ist, eine erste Farbartsignalverarbeitungsschaltung (122) zum Umsetzen eines Frequenzbandes einer Trägerwelle des amplitudenmodulierten Farbartsignals in einen gegenüber dem Frequenzband des frequenzmodulierten Leuchtdichtesignals niedrigeren Bereich, welche Schaltung (122) mit einer nachfolgenden Stufe der dynamischen Anhebungsschaltung (121) verbunden ist, einen Vorverstärker (127) zum Verstärken des frequenzmodulierten Leuchtdichtesignals und des amplitudenmodulierten Farbartsignals bei Wiedergabe vom Magnetband (108), eine Leuchtdichtesignalverarbeitungsschaltung (128) zum Demodulieren des frequenzmodulierten Leuchtdichtesignals, welche Schaltung (128) mit einer nachfolgenden Stufe des Vorverstärkers (127) verbunden ist, eine zweite Farbartsignalverarbeitungsschaltung (131) zum Umsetzen des Frequenzbandes der Trägerwelle des amplitudenmodulierten Farbartsignals in einen gegenüber dem Frequenzband des frequenzmodulierten Leuchtdichtesignals höheren Bereich, welche Schaltung (131) mit dem Vorverstärker (127) verbunden ist, ein Kammfilter (133) zum Entfernen von Übersprechsignalen von dem amplitudenmodulierten Farbartsignal, welches Filter (133) mit einer nachfolgenden Stufe der zweiten Farbartsignalverarbeitungsschaltung (131) verbunden ist, und eine dynamische Absenkungsschaltung (134) zum Verringern von eine kleine Amplitude aufweisenden Teilen des amplitudenmodulierten Farbartsignals enthält, welche Schaltung (134) mit einer nachfolgenden Stufe des Filters (133) verbunden ist.

**Revendications**

1. Dispositif d'enregistrement et de reproduction de signaux vidéo couleurs, du type comportant des moyens pour extraire un signal de luminance et un signal de chrominance d'un signal d'entrée de télévision en couleurs et pour amener par conversion la bande de fréquences dudit signal de chrominance dans une gamme inférieure à celle du signal de luminance afin d'enregistrer ledit signal de chrominance et ledit signal de luminance sur une bande magnétique, selon un mode de multiplexage fréquential caractérisé en ce que ledit dispositif comprend des moyens formant filtres (5, 6; 116, 118) servant à extraire un signal de chrominance SECAM et un signal de luminance d'un signal de télévision en couleurs SECAM, des moyens formant convertisseur (7; 120) servant à convertir ledit signal de chrominance SECAM en un signal de chrominance PAL, des moyens de traitement (10; 112) servant à amener par conversion la bande des fréquences dudit signal de chrominance PAL dans une gamme inférieure à celle dudit signal de luminance, et des moyens d'enregistrement (14— 16; 112, 113, 125, 126) pour enregistrer ledit signal de chrominance PAL converti du point de vue des fréquences et ledit signal de luminance sur une bande magnétique selon un mode de multiplexage fréquentiel.

2. Dispositif d'enregistrement et de reproduction de signaux vidéo couleurs, du type comportant des moyens pour extraire un signal de luminance et un signal de chrominance d'un signal d'entrée de télévision en couleurs et pour amener par conversion la bande de fréquences dudit signal de chrominance dans une gamme inférieure à celle du signal de luminance afin d'enregistrer ledit signal de chrominance et ledit signal de luminance sur une bande magnétique, selon un mode de multiplexage fréquentiel, caractérisé en ce que ledit dispositif comprend des moyens (120) servant à convertir un signal de chrominance d'un signal de télévision SECAM en un signal de modulation équilibré, un circuit d'accentuation dynamique (121) prévu dans l'étage—en aval desdits moyens de conversion (120), un filtre en piegne (133) servant à supprimer un signal de diaphonie des—pistes voisines d'une piste qui est reproduite selon le mode de lecture, et un circuit de désaccentuation dynamique (134) prévu dans l'étage en aval dudit filtre en peigne (133).

3. Dispositif d'enregistrement et de reproduction de signaux vidéo couleurs pour convertir un signal vidéo couleurs SECAM en un signal vidéo couleurs PAL et dans lequel un signal de chrominance modulé en fréquence et un signal de luminance modulé en amplitude sont extraits dudut signal vidéo couleurs SECAM contenant ledit signal de chrominance et ledit signal de luminance, ledit signal de luminance extrait est converti en un signal de luminance modulé en fréquence, ledit signal de chrominance extrait est converti en un signal de chrominance modulé en amplitude et une band de fréquences dudit signal de chrominance modulé en amplitude est amenée par conversion dans une gamme inférieure à une bande de fréquences dudit signal de luminance modulé en fréquence, en vue de réaliser l'enregistrement dudit signal de luminance modulé en fréquence et dudit signal de luminance modulé en amplitude sur une bande magnétique, caractérisé en ce que le dispositif comprend:

— un circuit d'accentuation dynamique (121) servant à accentuer des éléments de faible amplitude dudit signal de chrominance modulé en amplitude, ledit circuit d'accentuation dynamique (121) étant raccordé à un étage en aval de moyens (120) de conversion de signaux, servant à convertir ledit signal de chrominance modulé en fréquence en ledit signal de chrominance modulé en amplitude,

— un premier circuit (122) de traitement du signal de chrominance servant à amener par conversion une bande de fréquences d'une onde porteuse dudit signal de chrominance modulé en amplitude dans une gamme inférieure à ladite bande de fréquences dudit signal de luminance modulé en fréquence, ledit circuit (122) de traitement du signal de chrominance étant raccordé à un étage—en aval du circuit d'accentuation dynamique (121),

— un préamplificateur (127) servant à amplifier ledit signal de luminance modulé en fréquence et ledit signal de chrominance modulé en amplitude, reproduits à partir de ladite bande magnétique (108),

— un circuit (128) de traitement du signal de luminance, servant à réaliser la démodulation dudit signal de luminance modulé en fréquence, ledit circuit (128) de traitement du signal de luminance étant raccordé à un étage—en aval dudit préamplificateur (127),

— un second circuit (131) de traitement du signal de chrominance servant à amener par conversion ladite bande de fréquences de ladite onde porteuse dudit signal de chrominance modulé en amplitude dans une gamme supérieure à ladite bande de fréquences dudit signal de luminance modulé en fréquence, ledit second circuit (131) de traitement du signal de chrominance étant raccordé audit préamplificateur (127),

— un filtre en peigne (133) servant à éliminer les signaux de diaphonie dudit signal de chrominance modulé en amplitude, ledit filtre (133) étant raccordé à un étage en aval dudit second circuit (131) de traitement du signal de chrominance, et

— un circuit de désaccentuation dynamique (134) servant à réduire des éléments de faible amplitude dudit signal de chrominance modulé en amplitude, ledit circuit de désaccentuation dynamique (134) étant raccordè à un étage—en aval dudit filtre (133).

FIG. I

FIG. 2

TUNER — SWITCH — AGC — LPF → SECAM→PAL CONVERTER → LUMINANCE PROCESSING → VIDEO RECORDING

BPF → SECAM→PAL CONVERTER → CHROMA PROCESSING

SECAM RECEIVER ← RF CONVERTER ← SELECTOR ← PAL→SECAM CONVERTER ← SELECTOR ← CHROMA PROCESSING ← AMP

SELECTOR ← LUMINANCE PROCESSING

MIXER

0 076 047

FIG. 3

0 076 047

# FIG. 4

# FIG. 14

4

# FIG. 5

1H SWITCHING

# FIG. 6

# FIG. 7

# FIG. 8

FIG. 9

FIG. 11

| A | PAL | | | | | |
|---|-----|---|---|---|---|---|
| B | IH DELAY | | | | | |
| C | $\oplus$ | | | | | |
| D | $\ominus$ | | | | | |
| E | $\oplus$DEMO | B | B | B | B | B |
| F | $\ominus$DEMO | R | R | R | R | R |
| G | SEQUENTIAL | R | B | R | B | R |

6

FIG. 11.

FIG. 12.

FIG. 13

FIG. 15

FIG. 16

INPUT

-40    -30    -20    -10 dB    0

OUTPUT

-10 dB

-20

-30

-40

141

142

FIG. 17

+8 dB    INPUT -30 dB

+6    144

+4

+2    143    INPUT OdB

0

3.9M    4.4M    4.9M    (MHz)

FIG. 18

INPUT - 30dB

INPUT OdB

FIG. 19

INPUT OdB

INPUT - 30dB

FIG. 20

INPUT OdB

INPUT - 30dB

**0 076 047**

FIG. 21

FIG. 22

11

FIG. 22

FIG. 24

FIG. 25

FIG. 26

13